# EUROPÄISCHE PATENTSCHRIFT

(11) **EP 4 536 434 B1**
(45) Veröffentlichungstag und Bekanntmachung des Hinweises auf die Patenterteilung: **25.02.2026**
(21) Anmeldenummer: 23729428.5
(22) Anmeldetag: 05.06.2023
(51) Int. Cl.: B23D 51/02, B27G 5/02

(54) **VORRICHTUNG ZUR FÜHRUNG EINES WERKZEUGS BEIM ZERTEILEN EINES WERKSTÜCKS**
DEVICE FOR GUIDING A TOOL DURING THE CUTTING OF A WORKPIECE
DISPOSITIF DE GUIDAGE D'OUTIL LORS DE LA COUPE D'UNE PIÈCE À TRAVAILLER

(30) Priorität: 07.06.2022 DE 102022114297; 15.09.2022 DE 102022123563
(43) Veröffentlichungstag der Anmeldung: 16.04.2025
(73) Patentinhaber: Wolfcraft GmbH, 56746 Kempenich (DE)
(72) Erfinder: NONIEWICZ, Zbigniew, 56746 Kempenich (DE); WOICK, Lothar, 53506 Hönningen (DE)
(74) Vertreter: Grundmann, Dirk
(86) Internationale Anmeldenummer: PCT/EP2023/064948
(87) Internationale Veröffentlichungsnummer: WO 2023/237474

(56) Entgegenhaltungen:
- DE-A1- 102015 113 591
- GB-A- 2 440 919
- SE-B- 422 172
- US-A- 1 042 976
- US-A- 1 978 557
- US-A- 187 712
- US-A- 876 266

## Beschreibung

### Gebiet der Technik

Die Erfindung betrifft eine Vorrichtung zur Führung eines Werkzeuges beim Zerteilen eines Werkstücks, nach den Oberbegriffen der Ansprüche 1 und 5.

Das Werkzeug kann eine Säge oder ein Messer sein, das in einer Schnittlinie mittels der Führungselemente geführt ist. Nachdem das Werkstück zerteilt ist, kann das Schneidwerkzeug, beispielsweise die Schneide eines Messers oder die Verzahnung einer Säge, in einen insbesondere vertieften Bereich unterhalb der Auflagefläche eintauchen.

### Stand der Technik

Eine Vorrichtung gemäß Gattungsbegriff des Anspruchs 1 wird von der US 986,851 beschrieben. In Öffnungen einer Basisplatte einer Schneidlade, die sich in der Schnittlinie erstrecken, befinden sich Holzzapfen, die Stirnflächen aufweisen, gegen die Zähne einer Säge treten können, wenn mit Werkstück zerteilt worden ist.

Eine in der DE 10 2015 113 591 A1 beschriebene Vorrichtung besitzt ein Zentralelement, an dem zwei Schenkel befestigt sind. Die beiden Schenkel können sich um einen Winkel gegeneinander verschwenken. Die beiden voneinander weg weisenden Längsseiten der Schenkel bilden Schmiegeflanken aus, um die Winkel zweier Flächen eines Werkstücks abzugreifen. Eine Anschlagleiste bildet eine Anlagefläche für ein Werkstück aus, das auf Gehrung geschnitten werden soll. Der Anlagefläche liegt eine Gegenanlagefläche gegenüber. Die Gegenanlagefläche wird von einem Gegenanschlag ausgebildet.

Die GB 2 440 919 A beschreibt einen Sägetisch mit einem Schlitz, in dem die Säge geführt ist. Am Ende des Schlitzes ist ein Rollkörper angeordnet.

Vorrichtungen, mit denen Gehrungsschnitte gefertigt werden können, sind darüber hinaus auch bekannt aus den DE 114 591 A, DE 35 29 855 A1, DE 101 07 766 A1, DE 20 2007 016 558 U1, US 798,818, US 6,401,584 B1, US 2004/0000064 A1 und FR 28 17 829 A1.

Aus der US 5,737,990 A ist eine Vorrichtung bekannt, bei der die Schenkel ausgehend von einer Gestrecktlage sowohl um einen positiven als auch um einen negativen Winkel in eine Winkelstellung geschwenkt werden können.

Die US 876,266 beschreibt eine Vorrichtung zur Führung eines Werkzeuges nach den Oberbegriffen der Ansprüchen 1 und 5, wobei in einer Schnittführungslinie Rollen angeordnet sind, gegen die die Zähne eines Sägeblatts nach Vollendung des Schnitts treten können.

### Zusammenfassung der Erfindung

Der Erfindung liegt die Aufgabe zugrunde, ein Schutz- oder Opferelement einer gattungsgemäßen Vorrichtung gebrauchsvorteilhaft weiterzubilden.

Gelöst wird die Aufgabe durch eine Vorrichtung gemäß dem Anspruch 1 sowie eine Vorrichtung gemäß dem Anspruch 5. Erfindungsgemäß wird vorgeschlagen, dass das Schutz- oder Opferelement einen Kopf aufweist. Der Kopf soll eine gerundete Oberfläche aufweisen. Die Oberfläche kann sich auf einer Kugelfläche oder einer einer Kugelfläche ähnlichen Fläche erstrecken. Der Körper des Schutz- oder Opferelementes ist bevorzugt nietförmig und weist somit einen Kopf auf, dessen Durchmesser größer ist als der des Nietschaftes und der sich deshalb auf dem Rand einer Bohrung abstützen kann, in der der Schaft des Niets steckt. Als Folge dieser Ausgestaltung ist das Schutz- oder Opferelement in einfacher Weise austauschbar der erfindungsgemäßen Vorrichtung zugeordnet. Die Unterseite des Kopfes bildet eine Anschlagfläche aus, die auf einer Basisfläche aufliegen kann.

Bei bekannten Vorrichtungen zum Zerteilen von Werkstücken, die insbesondere als Gehrungsschneidladen ausgebildet sind, tritt die Schneidkante des Schneidwerkzeuges, beispielsweise die Verzahnung einer Säge oder die Schneide eines Messers, in der Endphase des Zerteilens gegen eine unter dem Niveau einer Auflagefläche des Werkstücks liegenden Fläche, beispielsweise eines Zentralelementes einer Gehrungslade. Es kann sich dabei um die Oberfläche eines Funktionsteiles der Vorrichtung handeln. Die Oberfläche kann aus Holz, Kunststoff oder Metall bestehen. Handelt es sich bei der in der Schnittführungslinie liegenden Oberfläche um die Oberfläche eines weichen Werkstoffs, so besteht die Gefahr, dass die Schneidkante die Vorrichtung beschädigt. Handelt es sich bei der in der Schnittführungslinie liegenden Oberfläche um die Oberfläche eines harten Werkstoffs mit scharfen Kanten, so besteht die Gefahr, dass die Schneidkante beschädigt wird.

Erfindungsgemäß sind in dem vertieften Bereich vorspringende Elemente vorgesehen, die in dieser Offenbarung auch als Schutzelemente oder Opferelemente bezeichnet sind. Diese Elemente besitzen eine Oberfläche, die gerundet ist. Bevorzugt ist die Oberfläche zumindest in der Schnittrichtung gerundet. Die Rundung kann eine Zylinderfläche sein, wobei die Zylinderachse quer zur Schnittführungslinie verläuft. Die Oberfläche kann aber auch die Oberfläche einer Kugel, einer Linse oder eines anderen einer Kugel ähnelnden Körpers sein. Die Oberfläche kann somit in einer oder in zwei Richtungen gerundet sein. Es wird als vorteilhaft angesehen, wenn der vertiefte Bereich eine ebene Basisfläche ausbildet. Die Oberflächen der Elemente können diese ebene Fläche überragen. Die Basisfläche kann parallel zur Auflagefläche verlaufen, wobei die Höhe, um die die Elemente die Basisfläche überragen, geringer ist, als der Abstand von Basisfläche zu Auflagefläche. Es sind bevorzugt zwei derartige Elemente vorgesehen, die voneinander so weit wie möglich beabstandet sind, damit die Schneidkante des Werkzeuges nach Vollendung des Zerteilens gegen zumindest eines der Elemente tritt und nicht gegen beispielsweise einen Rand eines die Basisfläche bildenden Basiskörpers. Die Elemente schützen dann den Basiskörper gegen Einschnitte.

Gemäß einer vorteilhaften Ausführung wird vorgeschlagen, dass die ein oder mehreren Schutz- oder Opferelemente von einem Niet ähnlichen Körper gebildet sind. Das Element weist einen Schaft auf, der in einer Bohrung steckt. Der Schaft ist mit dem Kopf verbunden, der aus der Bohrung herausragt. Der Kopf kann einen größeren Durchmesser als der Schaft aufweisen, sodass er sich über den Rand der Bohrung erstreckt. Die Bohrung erstreckt sich bevorzugt in Richtung einer Flächennormalen der Basisfläche. Die Kopfunterseite kann von einer Ebene ausgebildet sein. Der Kopf kann eine Linsenform aufweisen.

Gemäß einer vorteilhaften Ausführung kann das mindestens eine Element austauschbar der Vorrichtung zugeordnet sein. Die mit der Schneide oder der Sägeverzahnung des Werkzeugs in Kontakt tretende Oberfläche des Elementes kann aus einem weichen Werkstoff bestehen. Der Werkstoff ist insbesondere von der Schneide zerschneidbar oder von den Sägezähnen zerspanbar. Ein derartiges, weiches Element braucht nicht notwendigerweise eine gerundete Oberfläche aufzuweisen. Das Element kann eine Zylinderform aufweisen. Es kann aus Kunststoff, Holz oder aus Metall bestehen. Die Oberfläche kann sich bei der Verwendung abnutzen, sodass ein abgenutztes, geopfertes Element gegen ein neues Element ausgetauscht werden kann.

Alternativ wird vorgeschlagen, dass das Element ein Rollkörper ist. Es sind bevorzugt zwei Rollkörper vorgesehen. Die Rollkörper sind derart ausgebildet, dass ein Oberflächenabschnitt des Rollkörpers aus der Fläche des Basiselementes herausragt, sodass die Schneidkante des Werkzeugs nach Vollendung des Schnitts nicht mit dem Basiselement als solches, also mit dessen harter oder weicher Oberfläche in Berührung tritt, sondern mit der Oberfläche des Rollkörpers, sodass sich der Rollkörper einhergehend mit der Bewegung, beispielsweise einer Hin- und Herbewegung, des Werkzeuges dreht. Der Rollkörper ist deshalb derart in dem Basiselement beziehungsweise einer Oberfläche des Basiselementes eingelassen, dass ein Abschnitt über die Oberfläche hinausragt. Die beim Gebrauch des Werkzeugs in einer Horizontalebene liegende Auflagefläche, auf der das Werkstück zum Zerteilen aufgelegt werden kann, kann im Bereich der Schnittführungslinie unterbrochen sein. Die Auflagefläche kann somit aus zwei Elementen bestehen, die jeweils eine Auflagefläche ausbilden, wobei die beiden Auflageflächen bündig in einer Auflageebene liegen. Die Rollkörper können, bezogen auf die Auflagefläche, in einem in Vertikalrichtung tiefer liegenden Niveau angeordnet sein. Sie können auf dem Boden eines Schlitzes oder eines Freiraums zwischen den beiden Auflageflächen angeordnet sein. Nach dem vollständigen Zerteilen des Werkstücks tritt das Werkzeug in den Schlitz oder den Freiraum ein und gelangt dann in Kontakt mit den vertikal nach oben aus einer Lagerausnehmung herausragenden Abschnitten ein oder mehrerer Rollkörper. Gemäß der Erfindung sind die Rollkörper Walzen, die eine Zylinderform oder eine Fassform aufweisen können. Die Rollkörper liegen in Lagerausnehmungen einer Basisfläche des Basiselementes. Die Basisfläche kann auf dem tieferen Niveau liegen, also vertikal unterhalb der Auflageflächen. Gemäß einer Weiterbildung der Erfindung ist vorgesehen, dass die Lagerausnehmungen, in denen bevorzugt jeweils nur ein Rollkörper einliegt, zur Rückseite des Basiselementes offen sind. Späne, die beim Zerteilen des Werkstücks entstehen, können dann zwar in die Lagerausnehmung eintreten, fallen durch die Lagerausnehmung aber hindurch. Es ist hier von Vorteil, wenn die Lagerausnehmung ein zur Rückseite des Basiselementes hin offener Schacht ist, wobei die in Radialrichtung des Rollkörpers gemessene Breite des Schachtes größer ist, als der Durchmesser des Rollkörpers. Der Rollkörper wird nur im Bereich seiner beiden Enden gelagert. Hierzu weisen zwei in Achsrichtung des Rollkörpers voneinander beabstandete Wände Lagereinrichtungen auf. Diese Lagereinrichtungen sind jeweils von einer Lagerwanne ausgebildet. Der Rollkörper kann aber auch von seinen voneinander wegweisenden Stirnseiten abragende Achsstummel aufweisen. Diese können in ähnlich gestalteten Lagereinrichtungen gelagert sein. Der Rollkörper kann auch von einer Hülse ausgebildet sein, durch die eine Achse hindurchgesteckt ist, sodass die beiden Enden der Achse die Achsstummel ausbilden. Die Hülse kann auch auswechselbar auf der Achse sitzen. Die Lagerwanne bildet eine sich auf einer Innenzylindermantelfläche verlaufende Fläche aus. Diese Fläche erstreckt sich um mehr als 180 Grad um den Endabschnitt des Rollkörpers beziehungsweise den Achsstummel. Die Lagerfläche erstreckt sich aber um weniger als 360 Grad um ihr Zentrum. Dies hat zur Folge, dass sich eine Lagernische oder eine Lagertasche ausbildet, in die der Rollkörper eingeklipst werden kann. An den Rand dieser Lagernische oder Lagertasche können sich Schrägflächen anschließen, gegen die die Ränder der Walzen beziehungsweise der Achsstummel gebracht werden können, um die Rollkörper in die Lagernische oder Lagertasche einzuklipsen. In einer bevorzugten Ausgestaltung sind zwei Rollkörper vorgesehen. In einer bevorzugten Ausgestaltung werden die Führungselemente von Führungszapfen ausgebildet, die jeweils ein Zapfenpaar ausbilden, die in Richtung der Schnittführungslinie voneinander beabstandet sind. Die zu einem Zapfenpaar gehörenden Führungszapfen können Hülsen tragen, die einen Abstand zwischen sich belassen, der in etwa der Breite des Schneidwerkzeuges entspricht, sodass das Schneidwerkzeug zwischen zwei Zapfen eines Zapfenpaares geführt ist. Die Hülsen können dann auf den Breitseitenflächen des Schneidwerkzeuges abrollen. Es kann insbesondere vorgesehen sein, dass die beiden Rollkörper in unmittelbarer Nachbarschaft der Führungselemente angeordnet sind. Dabei kann vorgesehen sein, dass die Rollkörper zwischen den beiden Zapfenpaaren angeordnet sind. Der Werkstoff der Rollkörper kann ein Metall sein. Es kann sich hierbei um ein weiches Metall handeln, beispielsweise Messing. Der Rollkörper kann aber auch aus Kunststoff oder aus Holz gefertigt sein.

Die erfindungsgemäße Vorrichtung kann eine Anschlagleiste aufweisen, die eine Anschlagfläche ausbildet, die im Wesentlichen senkrecht zur Auflagefläche verläuft. Während die Auflagefläche bevorzugt in einer Horizontalebene verläuft, verläuft die Anschlagfläche bevorzugt in einer Vertikalebene. An die Anschlagfläche kann ein längliches Werkstück, welches zu Zerteilen ist und welches auf der Auflagefläche aufliegt, angedrückt werden, damit es in einer definierten Lage zur Schnittführungslinie liegt. Erfindungsgemäß kann die Anschlagleiste ein oder mehrere Freiräume aufweisen. Die Freiräume werden von nach oben offenen Einschnitten ausgebildet. Die Anschlagleiste kann einen oberen Rand aufweisen, der von der Auflagefläche einen größeren Abstand aufweist, als ein Boden des Freiraums. Der Freiraum kann seitliche Begrenzungswände aufweisen, die parallel verlaufen und sich in Vertikalrichtung erstrecken. Die sich in Horizontalrichtung erstreckende Breite des Freiraums, also der Abstand zwischen seinen beiden sich in Vertikalebenen erstreckenden Wänden, kann größer sein, als die in Vertikalrichtung gemessene Höhe oder Tiefe des Freiraums. Der Abstand zwischen einem Boden des Freiraums und der Auflagefläche kann kleiner sein, als die Höhe des Freiraums. Der Freiraum eröffnet die Möglichkeit, dort ein Klemmelement, beispielsweise eine Spannzwinge, anzusetzen, mit der das Werkstück gegen die Auflagefläche oder gegen die Anlagefläche der Anschlagleiste gedrückt wird.

Die Schnittführungslinie erstreckt sich über die gesamte Länge des Basiskörpers über dessen Oberfläche. Die Führungselemente sind bevorzugt in einer geringen Entfernung vom Rand des Basiskörpers angeordnet. Es kann ferner vorgesehen sein, dass der Rand des Basiskörpers einen entlang der Schnittführungslinie verlaufenden Einschnitt aufweist. Bevorzugt besitzt jeder der beiden sich gegenüberliegenden Ränder in der Schnittführungslinie verlaufende Einschnitte in der Basisfläche. In diesen mindestens einen Einschnitt kann die Schneidkante eintreten, wenn das Schneidwerkzeug in einer verkanteten Stellung angesetzt wird.

Die zuvor beschriebenen technischen Merkmale sind bevorzugt an einer Schneidlade oder einer Schmiege realisiert, wie sie in den DE 10 2021 123 535, DE 10 2021 123 534, DE 10 2021 123 527, DE 10 2021 123 295 oder DE 10 2015 113 591 A1 beschrieben wird.

Eine derart ausgebildete Schneidlade besitzt als Basiselement ein Zentralelement, an dem zwei Schenkel jeweils an Anlenkstellen angelenkt sind. Mittels eines Getriebes, beispielsweise ineinandergreifender Verzahnungen, sind die Schenkel gegenüber dem Zentralelement derart verschwenkbar, dass die Schnittführungslinie immer in der Winkelhalbierenden der beiden Schenkel liegt. Jeder der beiden Schenkel kann eine Auflagefläche zur Auflage des Werkstücks ausbilden und eine Anlagefläche zur Anlage des Werkstücks, wobei die Anlagefläche von einer Anlageleiste ausgebildet sein kann. Der Anlagefläche kann eine Gegenanlagefläche gegenüberliegen, die einem Gegenanschlag zugeordnet ist. Der Gegenanschlag kann in Richtung auf die Anlagefläche verlagert werden. Der Gegenanschlag kann an dem Schenkel festgelegt werden, sodass das Werkstück zwischen Anlagefläche und Gegenanlagefläche fixiert werden kann. Zur Fixierung des Gegenanschlags kann ein Drehknopf verwendet werden, der einen Gewindeschaft aufweist, der mit einer Mutter zusammenwirkt. Der Gewindeschaft kann einen Schlitz innerhalb der Auflagefläche durchdringen. Mittels der Mutter kann der Gegenanschlag in eine Klemmstellung gebracht werden.

### Kurze Beschreibung der Zeichnungen

Ausführungsbeispiele der Erfindung werden nachfolgend anhand beigefügter Zeichnungen erläutert. Es zeigen:

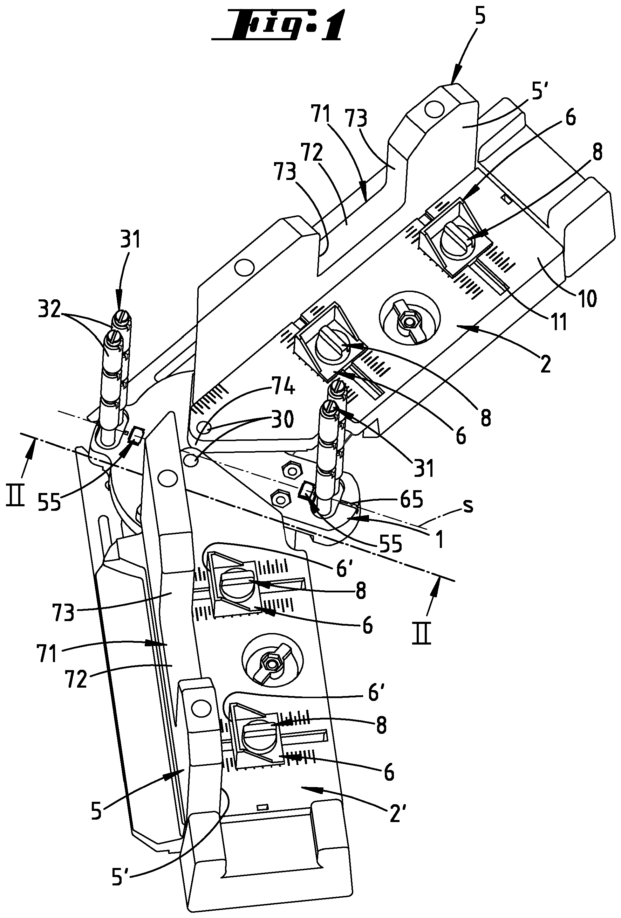

- Fig. 1: eine perspektivische Darstellung einer Schneidlade,

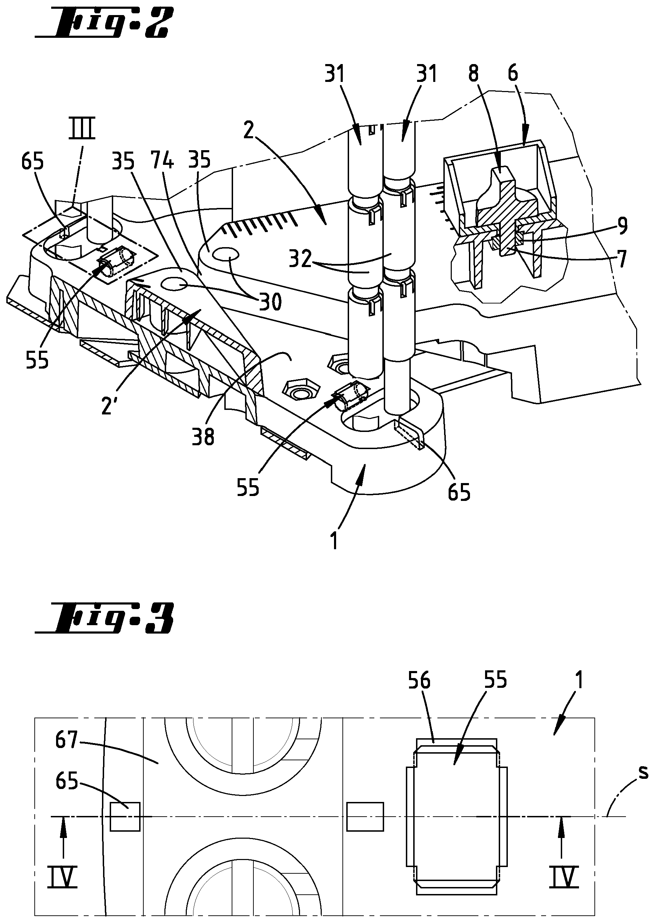

- Fig. 2: den Schnitt gemäß der Linie II-II in Figur 1,
- Fig. 3: vergrößert den Ausschnitt III in Figur 2,

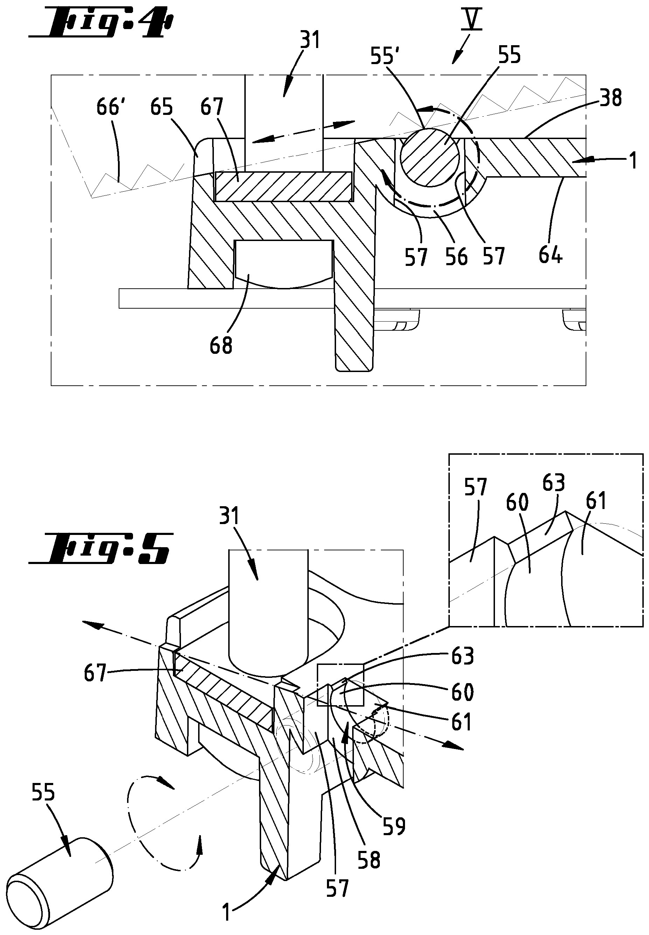

- Fig. 4: vergrößert den Schnitt gemäß der Linie IV-IV in Figur 3,
- Fig. 5: perspektivisch die Ansicht V in Figur 4,

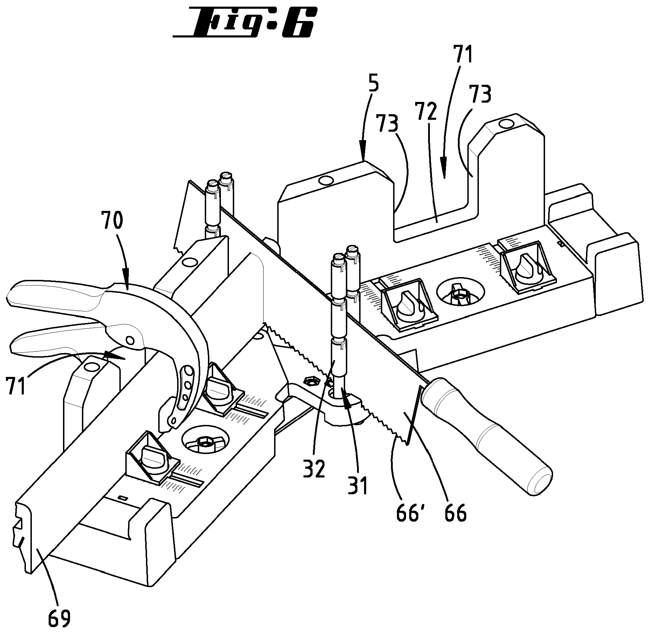

- Fig. 6: eine perspektivische Darstellung ähnlich der Figur 1, jedoch mit einer ein Werkstück 69 haltenden Klemme 70 und einem Werkzeug mit einem Sägeblatt 66, mit welchem das Werkstück 69 zerteilt wird,

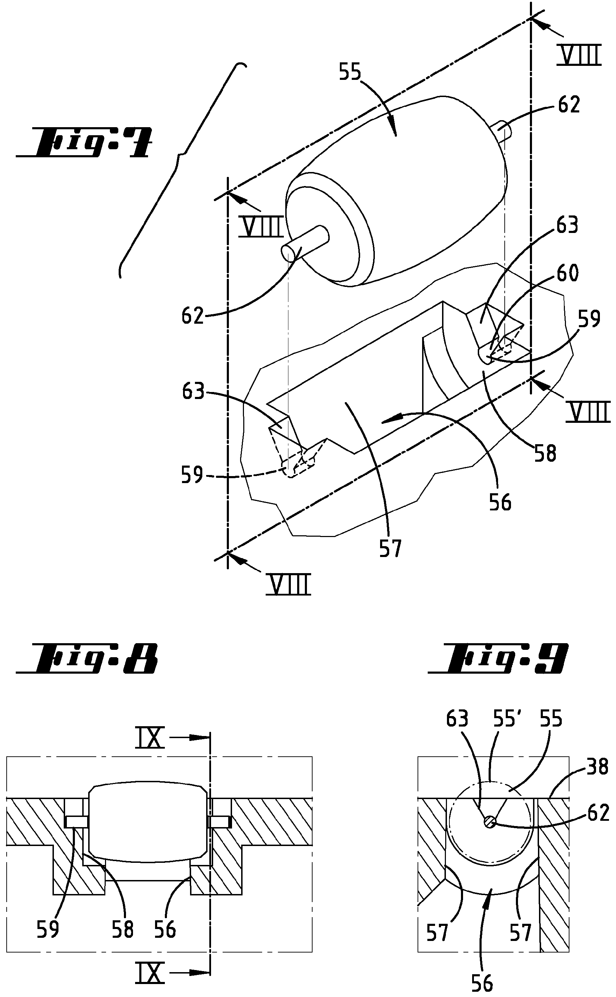

- Fig. 7: ein zweites Ausführungsbeispiel eines Rollkörpers mit einer Fassform,
- Fig. 8: den in eine Lagerausnehmung 56 eingesetzten Rollkörper 55 gemäß Figur 7 in der Schnittebene VIII,
- Fig. 9: den Schnitt gemäß der Linie IX-IX in Figur 8 und
- Fig. 10: eine Draufsicht auf ein zweites Ausführungsbeispiel der Erfindung,
- Fig. 11: den Schnitt gemäß der Linie XI-XI in Figur 10,
- Fig. 12: den Schnitt gemäß der Linie XII-XII in Figur 10,
- Fig. 13: den Schnitt gemäß der Linie XIII-XIII in Figur 10,
- Fig. 14: den Schnitt gemäß der Linie XIV-XIV in Figur 10 und
- Fig. 15: den Schnitt gemäß der Linie XV-XV in Figur 10.

### Beschreibung der Ausführungsformen

Ein ein Basiselement ausbildendes Zentralelement 1 besitzt eine nach oben weisende Basisfläche 38, von der zwei Paare von Führungselementen 31 abragen. Die Führungselemente bilden längliche Führungszapfen 31 aus, die mit einem in den Zeichnungen nicht dargestellten Gewindeabschnitt eine ebenfalls nicht dargestellte Bohrung einer in einer Vertiefung der Basisfläche 38 einliegenden Befestigungsplatte 67 durchgreifen und die in Innengewindeöffnungen einer Vierkantmutter 68 eingeschraubt sind. Jeweils einer Befestigungsplatte 67 entspringen zwei dicht nebeneinander angeordnete Führungszapfen 31, die eine Mehrzahl übereinander angeordnete Hülsen 32 tragen, die sich um den Führungszapfen 31 drehen können. Die beiden Spalte zwischen jeweils zwei Führungszapfen 31 haben eine derartige Spaltweite, dass ein Sägeblatt dazwischen geführt werden kann. Die Spalte zwischen den Führungszapfen 31 definieren eine Schnittführungslinie S, entlang welcher die Schneidkante 66' eines Schneidwerkzeuges 66 hin- und herbewegt wird, wenn mit dem Schneidwerkzeug ein Werkstück 69 zerteilt werden soll.

Die Basisfläche 38 besitzt zwischen zwei Führungselementen mit jeweils zwei Führungszapfen 31 Ausnehmungen, in denen Rollkörper 55 gelagert sind. Die Ausnehmungen bilden jeweils eine Lagerausnehmung 56, in der ein zylindrischer Rollkörper 55 gelagert ist, wobei die Zylinderachse in einer Horizontalebene verläuft und quer zur Schnittführungslinie S. Die Lagerausnehmungen 56 sind unmittelbar den Führungselementen benachbart.

Die Lagerausnehmung 56 ist zur Basisfläche 38 hin offen und als Schacht ausgebildet. Sie ist auch zur von der Basisfläche 38 wegweisenden Rückseite 64 offen. Die zwischen den in Schnittrichtung voneinander beabstandeten Wänden 57 gemessene Breite der Lagerausnehmung 56 ist größer, als der Durchmesser des in der Lagerausnehmung 56 drehbar einliegenden Rollkörpers 55. Die in Achsrichtung des Rollkörpers 55 voneinander beabstandeten Wände 58 der Lagerausnehmung 56 bilden jeweils eine Lagerwanne 59 aus in denen ein axialer Endabschnitt des Rollkörpers 55 drehbar gelagert ist. Die Lagerwanne 59 bildet eine auf einer Innenzylindermantelfläche verlaufende Lagerfläche 60 aus, die derart gestaltet ist, dass der an der Lagerfläche anliegende Rollkörper 55 mit einem Umfangsabschnitt 55' aus der Lagerausnehmung 56 herausragt.

Die Lagerfläche 60 erstreckt sich auf einem Umfangswinkel von mehr als 180 Grad, aber weniger als 360 Grad, um eine Zentralachse, sodass der Rollkörper 55 durch die nach oben weisende Öffnung der von der Lagerfläche 60 gebildeten Nische in die Lagerwanne 59 eingeklipst werden kann. Die Nische weist eine Rückseite 61 auf, wobei der Abstand zwischen den beiden voneinander wegweisenden Rückseiten 61 nur geringfügig größer ist, als die axiale Länge des Rollkörpers 55. Im Bereich der Öffnung der Nische können zudem zwei Schrägflanken 63 verlaufen, die das Einklipsen des Rollkörpers 55 erleichtern.

In der Basisfläche 38 können darüber hinaus, insbesondere am Rand des Basiskörpers 1, Einschnitte 65 vorgesehen sein, in die die Schneidkante des Schneidwerkzeuges eingreifen kann. Dies ist insbesondere dann vorteilhaft, wenn die Schneidkante einen Winkel zur Horizontalebene einnimmt. Wird die Schneidkante 66' in einer Horizontalebene geführt, so berührt die Schneidkante 66' nach der Vollendung des Zerteilens des Werkstücks 69 die beiden Rollkörper 55, die dann durch die Bewegung des Schneidwerkzeugs 66 gedreht werden.

Um die Schneidkante 66' zu schützen, kann vorgesehen sein, dass der Rollkörper 55 aus einem weichen Material besteht, beispielsweise aus einem weichen Metall, beispielsweise Messing. Es kann aber auch vorgesehen sein, dass ein Rollkörper 55 lediglich eine weiche Oberfläche aufweist. Die Rollkörper können wegen der nach unten offenen Lagerausnehmung 56 mit einem Werkzeug nach oben hin aus der Lagerausnehmung 56 herausgenommen werden, beispielsweise um sie auszutauschen.

Das in den Zeichnungen dargestellte Ausführungsbeispiel besitzt zwei am Zentralelement 1 um jeweils eine Drehachse 30 drehbar angelenkte Schenkel 2, 2', die mittels eines Getriebes, insbesondere mittels ineinandergreifender Zähne jeweils eines verzahnten Kreissektors derart gekoppelt sind, dass sich die Schenkel 2, 2' klappsymmetrisch um das Zentralelement 1 derart verschwenken, dass die Schnittführungslinie S immer in einer Winkelhalbierenden zu den Anlageflächen 5' von Anschlagleisten 5 verläuft. Die Anlageflächen 5' verlaufen in Vertikalebenen senkrecht zu von den Schenkeln 2, 2' ausgebildeten Auflageflächen 10.

Es sind Gegenanschläge 6 vorgesehen, die Gegenanlageflächen 6' ausbilden. Durch Verschieben der Gegenanschläge 6 in einer Richtung quer zur Anlagefläche 5' kann der Abstand zwischen den Anlageflächen 5' und der Gegenanlagefläche 6' eingestellt werden. Zum Fixieren der Gegenanschläge 6 ist ein Drehknopf 8 mit einem Gewindezapfen 7 vorgesehen. Der Gewindezapfen 7 durchdringt einen Schlitz 11, in dem der Gegenanschlag 6 geführt werden kann. Der Gewindezapfen 7 greift in eine Mutter 9 ein, die an einer Unterseite des Schenkels 2, 2' befestigt ist.

In den Anschlagleisten 5 sind Aussparungen vorgesehen. Die Aussparungen bilden jeweils einen nach oben offenen Freiraum 71, der einen unteren Boden 72 und zwei vertikal verlaufende Wände 73 aufweist. Der Boden 72 ist geringer von der Auflagefläche 10 beabstandet als eine obere Randkante der Anschlagleiste 5. In diese Aussparung kann eine Klemme 70 eingreifen, um das Werkstück 69 entweder gegen die Anlagefläche 5' oder die Auflagefläche 10 zu verspannen.

Die Lagerkörper 55 können von ihren Stirnseiten abragende Achsstummel 62 aufweisen, die in Lagerausnehmungen 56 gelagert sind. Auch hier bilden die Lagerausnehmungen 56 Lagerwannen 59, die Einschnürungen aufweisen, sodass der Rollkörper 55 in die Lagerausnehmung eingeklipst werden kann. Auch hier können Schrägflanken 63 vorgesehen sein, gegen die die Achsstummel 62 gebracht werden können, um sie in die Lagerwanne 59 einzuklipsen.

Zwischen den beiden Schenkeln 2, 2' bildet sich ein Freiraum aus, der einen vertieften Bereich 74 ausbildet. Der Boden des vertieften Bereichs ist die Oberfläche des Basiskörpers 1. In dieser ebenen Fläche erstrecken sich die jeweils ein Schutz- oder Opferelement ausbildenden Rollkörper.

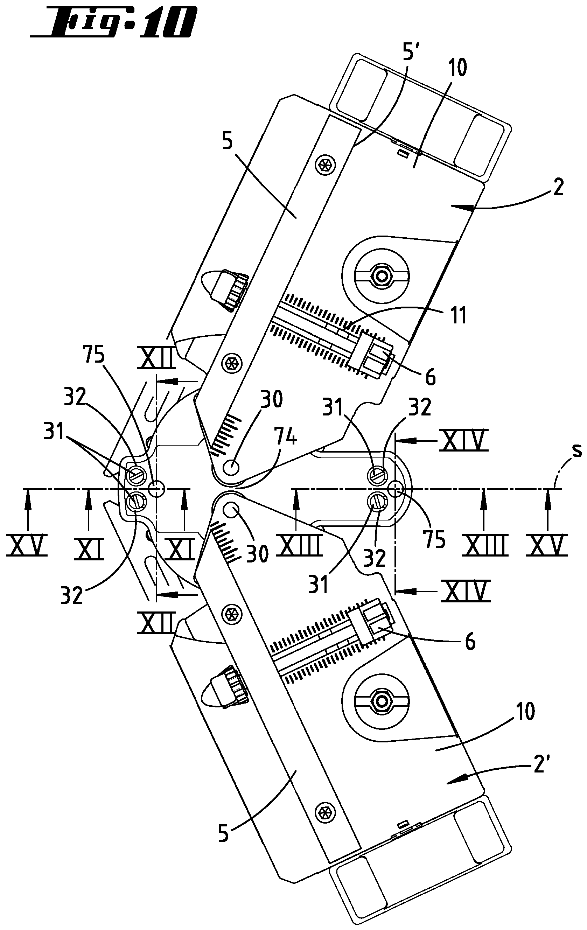

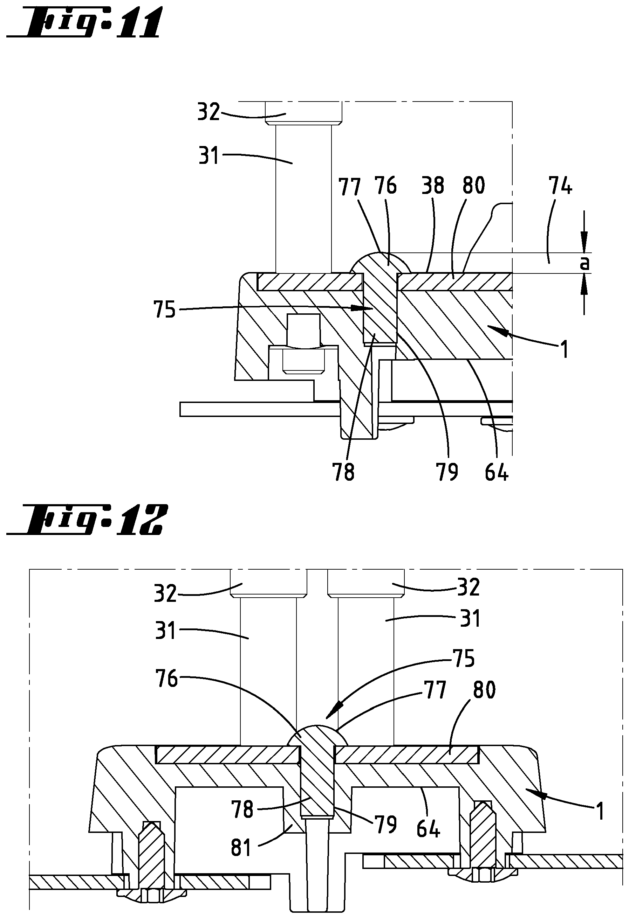

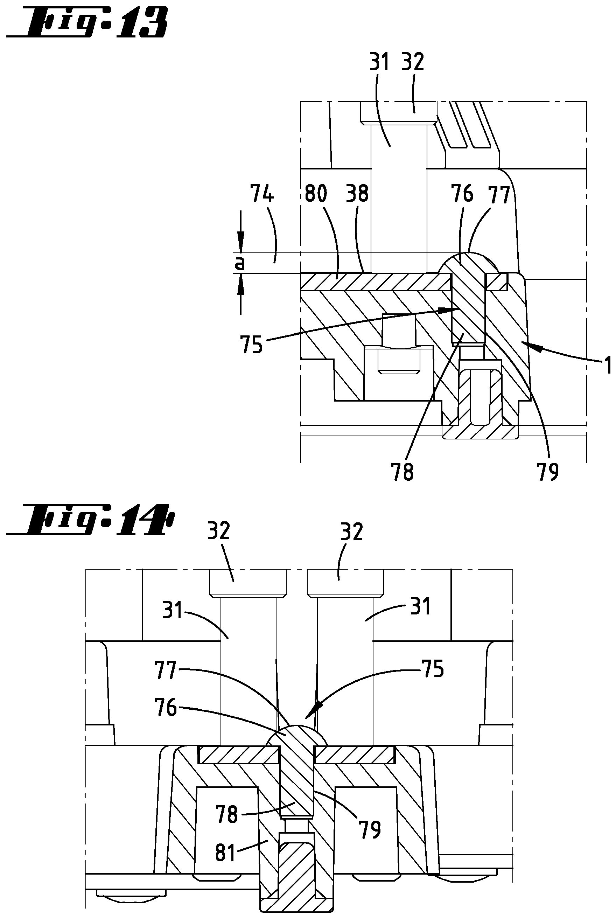

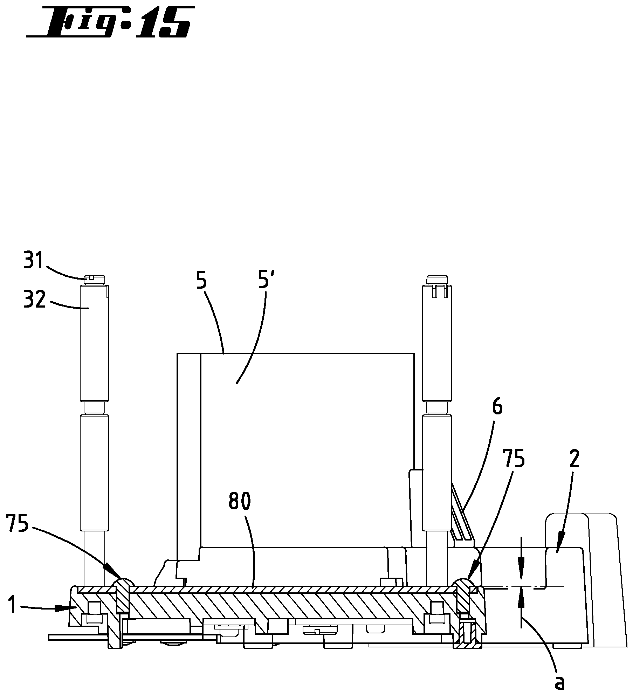

Die Figuren 10 bis 15 zeigen ein zweites Ausführungsbeispiel, bei dem die Elemente, mit denen eine Beschädigung einer Schneide oder einer Sägeverzahnung verhindert werden soll beziehungsweise mit denen eine Beschädigung des Basiskörpers 1 vermieden werden soll, als Stift, Niet, Einsteckteil oder auch als Schraube ausgebildet sein kann. Bei dem in den Zeichnungen dargestellten Ausführungsbeispiel besitzt das Schutz- oder Opferelement 75 einen Schaft 78, der eine Zylinderform aufweisen kann. Der Schaft kann aber auch ein Gewinde aufweisen. Der Schaft kann sowohl einen kreisförmigen als auch einen eckigen Querschnitt aufweisen.

An den Schaft schließt sich ein Kopf 76 an, der eine glatte Oberfläche 77 aufweist. Die Oberfläche 77 ist gewölbt. Sie kann sich entlang einer Kugeloberfläche erstrecken. Sie kann sich aber auch entlang der Oberfläche eines Ellipsoiden erstrecken. Die Oberfläche kann auch Strukturen aufweisen, beispielsweise eine Schraubwerkzeug-Eingriffsöffnung, wenn das Element 75 als Schraube ausgebildet ist. Der Schraubenkopf kann dann ein Linsenkopf sein.

In dem in den Zeichnungen dargestellten Ausführungsbeispiel ist das Schutz- oder Opferelement 75 ein Aluminiumniet, der mit einem gerundeten Kopf aus einer Öffnung herausragt. Der zylinderförmige Körper kann aus Holz oder aus Kunststoff sein und insbesondere aus einem zerschneidbaren oder zerspanbaren Werkstoff.

Die in den Zeichnungen dargestellte Vorrichtung besitzt zumindest einen Schenkel 2, 2', der eine Auflagefläche 10 für ein Werkstück 69 ausbildet. An die horizontale Auflagefläche 10 grenzt eine vertikale Anlagefläche 5' an, an die das Werkstück angelegt werden kann. Die Anlagefläche 5' kann von einer Anschlagleiste 5 ausgebildet sein, der ein Gegenanschlag 6 gegenüberliegen kann, der eine Gegenanschlagfläche ausbildet, sodass das Werkstück 69 zwischen Anschlagfläche und Gegenanschlagfläche eingespannt werden kann.

Die Auflagefläche 10 definiert ein erstes Niveau, welches höher ist, als ein zweites Niveau, auf welchem sich eine Basisfläche 38 erstreckt, von der die gekrümmten oder gewölbten Oberflächen 77 von zwei Elementen 75 um einen Abstand a abragen. Der Abstand a ist geringer, als der vertikale Abstand der beiden Niveaus.

Beim Ausführungsbeispiel werden Auflagefläche 10 und Basisfläche 38 von zwei gegeneinander beweglichen Körpern ausgebildet. Die beiden Flächen 10, 38 können aber auch vom selben Körper ausgebildet sein.

Der Basiskörpers 1 kann aus Kunststoff bestehen und eine Bohrung 79 aufweisen, in der der Schaft 78 steckt. Die Innenwandung der Bohrung 79 kann ein Innengewinde aufweisen. Die Innenwandung kann aber auch glatt sein. Die Bohrung 79 kann einen Boden aufweisen. Sie kann aber auch nach unten offen sein. Beim Ausführungsbeispiel ragt von einer Rückseite 64 des Basiskörpers 1 ein Vorsprung 81 ab, der als Rippe ausgebildet sein kann. Die Bohrung 79 erstreckt sich bis in diesen Vorsprung hinein. An dem Vorsprung 81 kann auch ein Standfuß befestigt sein.

In einer Ausnehmung der Oberseite des Basiskörpers 1 liegt eine Platte 80. Die Platte kann aus Kunststoff oder einem anderen geeigneten Werkstoff bestehen. Bevorzugt ist die Platte 80 aus Metall. Die Platte 80 besitzt eine Öffnung, die mit der Bohrung 79 fluchtet, sodass der Kopf 76 des Elementes 75 auf der Metallplatte 80 aufliegt.

Der Basiskörper 1 besitzt eine sich entlang einer Schnittführungslinie S erstreckende Länge, wobei, bezogen auf die Schnittführungslinie S, im Bereich der beiden Endabschnitte des Basiskörpers 1 jeweils zwei Führungselemente 31 vorgesehen sind, die die Schnittführungslinie S definieren. In unmittelbarer Nachbarschaft zu den beiden Paaren von Führungselementen 31 ist jeweils ein Schutz- oder Opferelement 75 angeordnet, wobei der Abstand der beiden Schutz- oder Opferelemente 75 so gewählt ist, dass das Schneidwerkzeug nach dem vollständigen Zerteilen des Werkstücks nur die Oberflächen 77 der beiden Schutz- oder Opferelemente 75 berührt. Dadurch wird der Basiskörper 1 gegen Beschädigungen durch das Schneidwerkzeug geschützt. Aufgrund ihrer Glattwandigkeit beziehungsweise ihrer Kantenfreiheit wirkt eine Berührung der Schneidkante nicht zerstörend. Besitzt das Schutz- oder Opferelement 75 eine weiche Oberfläche 77, weil es beispielsweise aus Kunststoff, Holz oder aus Aluminium besteht, so wird das Schutz- oder Opferelement 75 nach einer Vielzahl von Kollisionen mit der Schneide zerstört. Es muss dann gegen ein anderes Schutz- oder Opferelement 75 ausgetauscht werden.

Hinsichtlich der weiteren Ausgestaltungsmerkmale des zweiten Ausführungsbeispiels wird auf die Ausführungen zum ersten Ausführungsbeispiel verwiesen. Die dort beschriebenen Besonderheiten können auch beim zweiten Ausführungsbeispiel verwirklicht sein.

Auch die besonderen Eigenschaften des zweiten Ausführungsbeispiels können beim ersten Ausführungsbeispiel verwirklicht sein. Beim zweiten Ausführungsbeispiel ist der Gegenanschlag 6 beispielsweise mit einer in einer Horizontalebene liegenden Gewindespindel verstellbar.

## Patentansprüche

1. Vorrichtung zur Führung eines Werkzeuges (66) beim Zerteilen eines Werkstücks (69), mit einer Auflagefläche (10) für das Werkstück (69), mit Führungselementen (31) zur Führung des Werkzeuges (66) entlang einer Schnittführungslinie (S) und mit ein oder mehreren in der Schnittführungslinie (S) angeordneten Schutz- oder Opferelementen (75), die eine gerundete Oberfläche (77) aufweisen, gegen die das Werkzeug (66) unmittelbar nach Vollendung des Zerteilens treten kann, **dadurch gekennzeichnet, dass** die Oberfläche (77) von einem Kopf (76) eines mit einem Schaft (78) in einer Bohrung (79) steckenden Körpers gebildet ist.

2. Vorrichtung nach Anspruch 1, **dadurch gekennzeichnet, dass** die Oberfläche (77) sich auf einer Kugelfläche oder einer, einer Kugelfläche ähnlichen Fläche erstreckt.

3. Vorrichtung nach einem der vorhergehenden Ansprüche, **dadurch gekennzeichnet, dass** der Körper nietähnlich ist, wobei der Kopf (76) einen größeren Durchmesser aufweist als der Schaft (78) und sich über den Rand der Bohrung (79) erstreckt.

4. Vorrichtung nach einem der vorhergehenden Ansprüche, **dadurch gekennzeichnet, dass** der Schaft (78) aus der Bohrung (79) herausziehbar ist, materialeinheitlich mit dem Kopf (76) verbunden ist und aus Aluminium besteht.

5. Vorrichtung zur Führung eines Werkzeuges (66) beim Zerteilen eines Werkstücks (69), mit einer Auflagefläche (10) für das Werkstück (69), mit Führungselementen (31) zur Führung des Werkzeuges (66) entlang einer Schnittführungslinie (S) und mit ein oder mehreren in der Schnittführungslinie (S) angeordneten, als Rollkörper (55) ausgebildeten Schutz- oder Opferelementen, die eine Oberfläche aufweisen, gegen die das Werkzeug (66) unmittelbar nach Vollendung des Zerteilens treten kann, wobei der Rollkörper (55) eine um eine quer zur Erstreckungsrichtung der Schnittführungslinie (S) verlaufende Drehachse drehbare Walze ist, die in einer Lagerausnehmung (56) einliegt, wobei zwei in Richtung einer Achse des Rollkörpers (55) voneinander beabstandete Wände (58) Lagerwannen (59) zur Lagerung der voneinander weg weisenden Endabschnitte des Rollkörpers (55) oder Achsstummel (62) des Rollkörpers (55) aufweisen, **dadurch gekennzeichnet, dass** die Lagerwanne (59) eine sich auf einer Innenzylindermantelfläche um mehr als 180 Grad, aber weniger als 360 Grad erstreckende Lagerfläche (60) ausbildet, die mit einer Rückwand (61) eine Nische ausbildet.

6. Vorrichtung nach Anspruch 5, **dadurch gekennzeichnet, dass** die Lagerausnehmung (56) ein nach oben und nach unten offener Schacht ist, dessen in Radialrichtung des Rollkörpers (5) gemessene Breite größer ist als der Durchmesser des Rollkörpers (55).

7. Vorrichtung nach einem der Ansprüche 5 oder 6, **dadurch gekennzeichnet, dass** der Rollkörper (55) eine Zylinderform oder eine Fassform aufweist.

8. Vorrichtung nach einem der Ansprüche 5 bis 7, **dadurch gekennzeichnet, dass** der Rollkörper (55) aus einem weichen Metall besteht.

9. Vorrichtung nach einem der vorhergehenden Ansprüche, **dadurch gekennzeichnet, dass** sich unterhalb des Niveaus der Auflagefläche (10) eine ebene Basisfläche (38) eines vertieften Bereichs (74) erstreckt, in den das Werkzeug (66) nach Vollendung des Zerteilens eintritt, wobei die Schutz-oder Opferelemente (75) der Basisfläche (38) entspringen.

10. Vorrichtung nach einem der vorhergehenden Ansprüche, **dadurch gekennzeichnet, dass** zwei Schutz- oder Opferelemente (55, 75) in einer Ebene angeordnet sind, über die die gerundeten Oberflächen (77) mit einem Abstand (a) ragen, der geringer ist, als ein Abstand parallel zu dieser Ebene verlaufenden Auflagefläche (10).

11. Vorrichtung nach einem der Ansprüche 9 bis 10, **gekennzeichnet durch** ein oder mehrere in der Schnittführungslinie (S) jeweils an einem Rand eines Basiskörpers (1) angeordnete Einschnitte (65) in der Basisfläche (38) zum Eintritt der Schneidkante (66') nach Vollenden des Zerteilens.

12. Vorrichtung nach einem der vorhergehenden Ansprüche, **dadurch gekennzeichnet, dass** eine Anschlagleiste (5) ein oder mehrere nach oben offene Freiräume (71) aufweist.

13. Vorrichtung nach Anspruch 11 oder 12, **dadurch gekennzeichnet, dass** der Basiskörper (1) ein Zentralelement ist, an dem zwei jeweils um eine Schwenkachse (30) schwenkbare Schenkel (2, 2') angelenkt sind, die jeweils eine Anschlagleiste (5) tragen und die in den Schwenkstellungen feststellbar sind, wobei die beiden Schenkel (2, 2') derart mit einem Getriebe miteinander verbunden sind, dass beim Verschwenken der Schenkel (2, 2') die Schnittführungslinie in einer Winkelhalbierenden durch von den Anschlagleisten (5) ausgebildeten Anlageflächen (5') verläuft.

## Claims

1. Device for guiding a tool (66) during the cutting of a workpiece (69), having a support surface (10) for the workpiece (69), having guide elements (31) for guiding the tool (66) along a cutting guide line (S) and having one or more protective or sacrificial elements (75) arranged in the cutting guide line (S), which have a rounded surface (77) against which the tool (66) can strike immediately after completion of the cutting, **characterized in that** the surface (77) is formed by a head (76) of a body inserted with a shank (78) in a bore (79).

2. Device according to claim 1, **characterized in that** the surface (77) extends on a spherical surface or a surface similar to a spherical surface.

3. Device according to one of the preceding claims, **characterized in that** the body is rivet-like, wherein the head (76) has a larger diameter than the shank (78) and extends over the edge of the bore (79).

4. Device according to one of the preceding claims, **characterized in that** the shank (78) can be pulled out of the bore (79), is integrally connected to the head (76) and consists of aluminium.

5. Device for guiding a tool (66) during the cutting of a workpiece (69), having a support surface (10) for the workpiece (69), having guide elements (31) for guiding the tool (66) along a cutting guide line (S) and having one or more protective or sacrificial elements arranged in the cutting guide line (S) formed as rolling bodies (55), which have a surface against which the tool (66) can strike immediately after completion of the cutting, wherein the rolling body (55) is a roller rotatable about an axis of rotation extending transversely to the direction of extension of the cutting guide line (S), which roller rests in a bearing recess (56), wherein two walls (58) spaced apart from one another in the direction of an axis of the rolling body (55) have bearing troughs (59) for supporting the end sections of the rolling body (55) pointing away from one another or stub axles (62) of the rolling body (55), **characterized in that** the bearing trough (59) forms a bearing surface (60) extending on an inner cylindrical lateral surface by more than 180 degrees but less than 360 degrees, which forms a niche with a rear wall (61).

6. Device according to claim 5, **characterized in that** the bearing recess (56) is a shaft open at the top and at the bottom, the width of which measured in the radial direction of the rolling body (55) is greater than the diameter of the rolling body (55).

7. Device according to one of claims 5 or 6, **characterized in that** the rolling body (55) has a cylindrical shape or a barrel shape.

8. Device according to one of claims 5 to 7, **characterized in that** the rolling body (55) consists of a soft metal.

9. Device according to one of the preceding claims, **characterized in that** a flat base surface (38) of a recessed area (74) extends below the level of the support surface (10), into which area the tool (66) enters after completion of the cutting, wherein the protective or sacrificial elements (75) protrude from the base surface (38).

10. Device according to one of the preceding claims, **characterized in that** two protective or sacrificial elements (55, 75) are arranged in a plane beyond which the rounded surfaces (77) protrude with a distance (a) which is smaller than a distance of the support surface (10) extending parallel to this plane.

11. Device according to one of claims 9 to 10, **characterized by** one or more incisions (65) in the base surface (38) arranged in the cutting guide line (S) in each case at an edge of a base body (1) for the entry of the cutting edge (66') after completion of the cutting.

12. Device according to one of the preceding claims, **characterized in that** a stop strip (5) has one or more free spaces (71) open at the top.

13. Device according to claim 11 or 12, **characterized in that** the base body (1) is a central element to which two legs (2, 2'), each pivotable about a pivot axis (30), are articulated, which each carry a stop strip (5) and which can be locked in the pivot positions, wherein the two legs (2, 2') are connected to one another with a gear mechanism in such a way that, when the legs (2, 2') are pivoted, the cutting guide line extends in an angle bisector through contact surfaces (5') formed by the stop strips (5).

## Revendications

1. Dispositif de guidage d'un outil (66) lors de la coupe d'une pièce à usiner (69), comportant une surface d'appui (10) pour la pièce à usiner (69), des éléments de guidage (31) pour guider l'outil (66) le long d'une ligne de guidage de coupe (S) et un ou plusieurs éléments de protection ou sacrificiels (75) disposés dans la ligne de guidage de coupe (S), lesquels présentent une surface (77) arrondie contre laquelle l'outil (66) peut venir buter immédiatement après l'achèvement de la coupe, **caractérisé en ce que** la surface (77) est formée par une tête (76) d'un corps inséré par une tige (78) dans un alésage (79).

2. Dispositif selon la revendication 1, **caractérisé en ce que** la surface (77) s'étend sur une surface sphérique ou une surface similaire à une surface sphérique.

3. Dispositif selon l'une des revendications précédentes, **caractérisé en ce que** le corps est de type rivet, la tête (76) présentant un diamètre plus grand que la tige (78) et s'étendant au-delà du bord de l'alésage (79).

4. Dispositif selon l'une des revendications précédentes, **caractérisé en ce que** la tige (78) peut être extraite de l'alésage (79), est reliée d'un seul tenant à la tête (76) et est constituée d'aluminium.

5. Dispositif de guidage d'un outil (66) lors de la coupe d'une pièce à usiner (69), comportant une surface d'appui (10) pour la pièce à usiner (69), des éléments de guidage (31) pour guider l'outil (66) le long d'une ligne de guidage de coupe (S) et un ou plusieurs éléments de protection ou sacrificiels disposés dans la ligne de guidage de coupe (S) et réalisés sous forme de corps de roulement (55), lesquels présentent une surface contre laquelle l'outil (66) peut venir buter immédiatement après l'achèvement de la coupe, le corps de roulement (55) étant un rouleau rotatif autour d'un axe de rotation s'étendant transversalement à la direction d'extension de la ligne de guidage de coupe (S), lequel rouleau repose dans un logement de palier (56), deux parois (58) espacées l'une de l'autre dans la direction d'un axe du corps de roulement (55) présentant des cuvettes de palier (59) pour le montage des sections d'extrémité du corps de roulement (55) opposées l'une à l'autre ou de tourillons (62) du corps de roulement (55), **caractérisé en ce que** la cuvette de palier (59) forme une surface de palier (60) s'étendant sur une surface latérale cylindrique intérieure sur plus de 180 degrés, mais moins de 360 degrés, laquelle forme une niche avec une paroi arrière (61).

6. Dispositif selon la revendication 5, **caractérisé en ce que** le logement de palier (56) est un puits ouvert vers le haut et vers le bas, dont la largeur mesurée dans la direction radiale du corps de roulement (55) est supérieure au diamètre du corps de roulement (55).

7. Dispositif selon l'une des revendications 5 ou 6, **caractérisé en ce que** le corps de roulement (55) présente une forme cylindrique ou une forme de tonneau.

8. Dispositif selon l'une des revendications 5 à 7, **caractérisé en ce que** le corps de roulement (55) est constitué d'un métal tendre.

9. Dispositif selon l'une des revendications précédentes, **caractérisé en ce qu'**une surface de base (38) plane d'une zone en creux (74) s'étend au-dessous du niveau de la surface d'appui (10), zone dans laquelle l'outil (66) pénètre après l'achèvement de la coupe, les éléments de protection ou sacrificiels (75) faisant saillie de la surface de base (38).

10. Dispositif selon l'une des revendications précédentes, **caractérisé en ce que** deux éléments de protection ou sacrificiels (55, 75) sont disposés dans un plan au-delà duquel les surfaces (77) arrondies font saillie d'une distance (a) qui est inférieure à une distance de la surface d'appui (10) s'étendant parallèlement à ce plan.

11. Dispositif selon l'une des revendications 9 à 10, **caractérisé par** une ou plusieurs entailles (65) dans la surface de base (38), disposées dans la ligne de guidage de coupe (S) respectivement au niveau d'un bord d'un corps de base (1), pour l'entrée de l'arête de coupe (66') après l'achèvement de la coupe.

12. Dispositif selon l'une des revendications précédentes, **caractérisé en ce qu'**une barre de butée (5) présente un ou plusieurs espaces libres (71) ouverts vers le haut.

13. Dispositif selon la revendication 11 ou 12, **caractérisé en ce que** le corps de base (1) est un élément central sur lequel sont articulées deux branches (2, 2') pivotantes chacune autour d'un axe de pivotement (30), qui portent chacune une barre de butée (5) et qui peuvent être bloquées dans les positions de pivotement, les deux branches (2, 2') étant reliées entre elles par un mécanisme d'engrenage de telle sorte que, lors du pivotement des branches (2, 2'), la ligne de guidage de coupe s'étend selon une bissectrice traversant des surfaces de contact (5') formées par les barres de butée (5).
